# EUROPEAN PATENT APPLICATION

(11) **EP 4 220 491 A1**
(43) Date of publication of application: **02.08.2023**
(21) Application number: 22153719.4
(22) Date of filing: 27.01.2022
(51) Int. Cl.: G06N 3/08

(54) **TECHNICAL INJECTION SYSTEM FOR INJECTING A RETRAINED MACHINE LEARNING MODEL**

(71) Applicant: Siemens Aktiengesellschaft, 80333 München (DE)
(72) Inventor: IONESCU, Tudor, 1190 Wien (AT); FRÖHLICH, Joachim, 85614 Kirchseeon (DE)
(74) Representative: Siemens Patent Attorneys

(57) **Abstract**

The invention is directed to a technical injection system (1) for injecting a retrained machine learning model (30), comprising a. a first computing unit (10) comprising a first storage medium (12), wherein the first computing unit (10) is configured for providing the retrained machine learning model (30); and preprocessing the retrained machine learning model (30); wherein the retrained machine learning model (30) is stored in the first storage medium (12); b. a second computing unit (20) comprising a second storage medium (22) and an injection interface (40), wherein the injection interface (40) is configured for injecting at least one relevant part of the retrained machine learning model (30) after processing from the first storage medium (12) of the first computing unit (10) into the second storage medium (22) of the second computing unit (20) by means of the injection interface at runtime; wherein a current machine learning model is stored in the second storage medium (22); and the injection comprises the identification of the at least one relevant part of the current machine learning model and the replacement of the identified at least one relevant part of the current machine learning model by the corresponding at least one relevant part of the retrained machine learning model.

## Description

### 1. Technical field

The present invention relates to a technical injection system for injecting a retrained machine learning model.

### 2. Prior art

Artificial Intelligence ("AI") systems, such as machine learning models, are known from the prior art. The AI systems are software programs whose behavior is learned from data instead of being explicitly programmed. The learning process is called "training" which requires plenty of data and significant computational resources. Thereby, the trained AI system solves a specific task for which it was trained, such as prediction of system properties or anomalies. Unlike conventional software, the learned behavior of the AI systems highly depends on the data including the parameters used during training, namely training data.

For example, the Adaptive Simplex Architecture ("ASA") uses a supervised learning model to compute e.g. robot motion plans in real time. The Neural Simplex Architecture ("NSA") uses reinforcement learning models to compute control parameters e.g. for autonomous vehicles.

The performance of an AI system will be high when the training data is a representative sample of the data on which the AI system will be applied later in the field. However, in the real-world scenarios domain drifts or domain shifts are commonly encountered. Domain drift means that the distribution shifts between training and test or application data. It is common that a trained AI system performs well after training and that its performance degrades over time as in-field data increasingly differs from the original training data.

Referring to the exemplary NSA, in case that the model output of a High Performance Controller ("HPC") lies outside a predefined safe region, a decision logic switches control from the HPC to a secondary, high-assurance controller ("HAC"). The HAC is in operation until the underlying machine learning model used as HPC is retrained. Thereby, the model output is applicable or used for controlling a technical unit or a component of the technical unit, such as an industrial robot, an industrial plant or an autonomous vehicle. The model output can be equally referred to as control output.

The disadvantage is that the required retraining of the machine learning model is complex and time consuming. Hence, prior art solutions suggest to run the suboptimal HAC over longer time periods, resulting in unreliable model outputs and hence an unreliable control of the technical unit or component of the technical unit.

Referring to the exemplary ASA, the control continuously switches between HPC and HAC, depending on the reliability of the machine learning model used as HPC. Hence, the model output of the ASA, such as trajectory plan, steering or brakes action can also be suboptimal in terms of e.g. (a) energy and material consumption because the HAC is used in up to 1% of the control cycles; and (b) stability because the HPC and HAC use different control approaches.

The unreliable i.e. unsmooth and/or unstable model outputs, are essential and used for the control of the technical unit. This incorrect control often causes severe safety hazards during operation, such as abrupt braking and/or changes of the direction of an autonomous vehicle. Further negative impacts are e.g. a decreased quality, throughput and/or availability of manufactured products in manufacturing processes of industrial plants. In the worst case, the impacts even result in personal harms, such as accidents by the incorrect control of the autonomous vehicle.

There is a need that the AI models deployed and operated, especially for control are "industrially-graded". This means the AI models have to be reliable and robust, even though, the conditions around its application scenario may change in order to avoid such negative impacts and personal harms.

It is therefore an objective of the invention to provide a technical injection system for injecting a retrained machine learning model in an efficient and reliable manner into a computing unit.

### 3. Summary of the invention

This problem is according to one aspect of the invention solved by a technical injection system for injecting a retrained machine learning model, comprising:
a. a first computing unit comprising a first storage medium, wherein the first computing unit is configured for
   providing the retrained machine learning model; and
   preprocessing the retrained machine learning model; wherein
   the retrained machine learning model is stored in the first storage medium;
b. a second computing unit comprising a second storage medium and an injection interface, wherein the injection interface is configured for
   injecting at least one relevant part of the retrained machine learning model after processing from the first
   storage medium of the first computing unit into the second storage medium of the second computing unit by means of the injection interface at runtime; wherein
   a current machine learning model is stored in the second storage medium; and
   the injection comprises the identification of the at least one relevant part of the current machine learning model and
   the replacement of the identified at least one relevant part of the current machine learning model by the corresponding at least one relevant part of the retrained machine learning model.

Accordingly, the invention is directed to a technical injection system for injecting a machine learning model. Thereby, the machine learning model is already retrained and hence an updated version of the machine learning model. Hence, the retraining is performed independent of the injection, and thus before the injection is triggered.

The technical injection system comprises two computing units, namely a first and a second computing unit. Preferably, the computing units are dissimilar from the constructional and/or the functional points of view. Hence, they are different from blue-green deployment techniques and devices.

The first computing unit is preferably designed for communicating to an external computing unit or device, preferably a machine learning platform. The training and/or retraining of the machine learning model can be performed independently by the machine learning platform. Further, the machine learning platform can be external to an autonomous system, such as a robot or an autonomous vehicle. Further, the function of the first computing unit is preferably not safety-critical. Hence, there is no need to perform the preprocessing in real time.

Further, the function of the second computing unit is preferably safety-critical and needs to obey to strict real-time requirements.

According to which, the first computing unit can be designed as a conventional computing unit such as a control computer. The second computing unit can be implemented using an FPGA ("Field Programmable Gate Array"), an ASIC ("Application-specific integrated circuit") or a similar device. Generically speaking, the second computing unit can be understood as an accelerator that can implement in hardware an algorithm for scoring trained machine learning models, such as neural networks. Scoring can be interpreted as the process of generating values based on a trained machine learning model, given some new input data. Scoring can be performed by a scoring module that is specific to the machine learning technique used.

The computing units each comprise a storage medium.

The first computing unit provides and preprocesses the retrained machine learning model. This results in a retrained and preprocessed machine learning model, which is used as input for the injection.

The retrained and preprocessed machine learning model is injected into the memory of the second computing unit. Therefore, the second computing unit comprises an injection interface. In more detail, the injection interface injects a relevant part of the retrained machine learning model after processing from the first storage medium into the second storage medium. The relevant part can be interpreted as core or essential part. The relevant part of the current machine learning model is identified and replaced by the corresponding relevant part of the retrained machine learning model. In other words, the core of the retrained machine learning model is copied into the core of the current machine learning model. Hence, the second storage medium comprises the relevant parts of the retrained machine learning model after injection and can be applied in the field on application data in a reliable and robust fashion.

The present invention ensures an efficient, seamless and reliable injection of any retrained machine learning models into any computing units at runtime.

This injection allows for example a runtime adaptation of the aforementioned HPC. Contrary to prior art, it is neither required to switch control from the HPC to the HAC, nor to run the HAC until the retraining is finished. The HPC can run the retrained machine learning model reliably and efficiently without interruptions, malfunctions or downtimes associated with retraining.

A further advantage is that the retrained machine learning model needs not to be reinitialized after injection at runtime, which would consume valuable cycle time.

Moreover, the amount of data that is transferred between the two computing units is minimized by only replacing the relevant part or core of the retrained machine learning model.

The computing units can implement different hardware- and/or software architectures in a flexible manner. The implementation can depend on the use case, the technical requirements or other conditions etc.

In a first aspect the first computing unit is hosted on or designed as an embedded device, preferably an embedded control computer or an edge device. Accordingly, the first computing unit can differ from the second computing unit and is designed as an embedded device, such as an off-the-shelf embedded control computer.

In a further aspect the first storage medium is a volatile or non-volatile storage medium. Accordingly, the first storage medium and the second storage medium can be designed identically or can differ from each other. An exemplary volatile storage medium is RAM ("Random Access Memory"). Exemplary non-volatile storage media are flash memory, hard drives, cloud and databases.

In a further aspect the preprocessing comprises compressing, decompressing, quantizing, optimizing, deserializing, initializing and/or testing. Accordingly, distinct preprocessing steps can be selected in a flexible and reliable manner. The advantage is that the preprocessing is completely independent of the injection and independent from the second computing unit. The preprocessing and injection are separated. Hence, the retrained machine learning model does not need to be preprocessed, such as reinitialized, after injection. After injection, the retrained machine learning model can be directly applied or run without any delays.

In a further aspect the first computing unit further comprises an input interface, configured for receiving a notification when the retrained machine learning model is available from a machine learning platform, other computing unit or other technical system. Accordingly, the injection is triggered by means of a notification or other message regarding the availably of the retrained machine learning model. The notification avoids any unnecessary or inappropriate injections and replacements. Alternatively, the injection can be triggered via other initiation means or can be performed continuously or periodically.

In a further aspect the input interface is further configured for receiving and/or downloading the retrained machine learning model from a machine learning platform, other computing unit or other technical system, preferably after reception of the notification. Accordingly, the term "providing" can be interpreted as receiving and downloading the retrained machine learning model. The download has proven to be particularly advantageous in view of efficiency and fast preprocessing.

In a further aspect the first computing unit is further configured for performing at least one test based on the retrained machine learning model before the injection is performed by the first computing unit through the injection interface of the second computing unit. The test is performed using a set of relevant input and output data provided together with the retrained machine learning model.

In a further aspect the injection is performed in the case that the test is successful. By successful it is meant that the model does not trigger an error and produces expected outputs within a specified maximum accuracy loss margin (e.g., 0.3%).

The test is preferably performed after compressing, quantizing, and/or optimizing the retrained model on the first computing unit.

Accordingly, the retrained machine learning model is tested before being injected. The testing ensures that the injection can be performed reliably and the injection will not lead to any failures, aborts or malfunction.

For example, in the case that a test is successful, a flag can be set to 1, otherwise to 0. The injection is then triggered and performed only when the flag is set to 1. The injection is skipped and prevented when the flag is set to 0.

In a further aspect the second computing unit (20) is designed as an accelerator component, preferably FPGA, Field Programmable Gate Array, or ASIC, Application-Specific Integrated Circuit. Accordingly, the second computing unit is designed as a high performance, highly efficient device which can implement a machine learning model (e.g., a dense neural network - DNN or a convolutional neural network - CNN) and a model scorer in hardware.

In a further aspect the second storage medium is a volatile or non-volatile storage medium.

In a further aspect the relevant part of the retrained machine learning model is at least one internal data structure, at least one layer, at least one bias, at least one weight and/or at least one parameter.

In a further aspect the injection is synchronized with a control cycle clock. Accordingly, the injection is performed before the system's control cycle clock triggers the input to the machine learning model. In other words, there is a delay, Δt, between the injection and the scoring of the retrained machine learning model, which ensures that the injection is not performed during scoring. The control cycle clock can trigger the injection and scoring periodically (e.g., every 10 milliseconds) or event-based (e.g., when a new control command is issued by an operator or subsystem). The advantage of the control cycle clock is that it synchronizes distinct computing devices in a way that avoids deadlocks and optimizes system performance.

In a further aspect the machine learning model receives as input sensor data from a sensor module (e.g., a camera) or at least one control command.

In a further aspect the machine learning model produces as output at least one control parameter or at least one motion parameter for controlling a technical unit or a component of the technical unit.

In a further aspect the injection interface is designed as an Ethernet, a parallel or a serial communication interface, preferably connected to a communication controller of the second computing unit. The communication controller is configured to write the received payload data, comprising the core of the retraining machine learning model, directly into the random access memory of the second computing device, where it can be accessed by the second scorer via device-specific data structures, such as lookup tables, registers, variables, etc. This direct memory access mechanism brings the advantage that, through the injection interface, the model injector can update or overwrite the current machine learning model core by a retrained machine learning model core shortly before scoring in a precise manner. The updating of the machine learning model can thus be performed continuously at system runtime.

In a further aspect the current machine learning model and the retrained machine learning model are semantically equivalent, preferably designed as neural networks, even more preferably designed as feedforward neural networks, convolutional neural networks or recurrent neural networks.

### 4. Short description of the drawings

In the following detailed description, presently preferred embodiments of the invention are further described with reference to the following figures:
- Fig. 1: illustrates the technical injection system according to an embodiment of the invention.
- Fig. 2: illustrates a computer-implemented method for injection according to an embodiment of the invention.

### 5. Detailed description of preferred embodiments

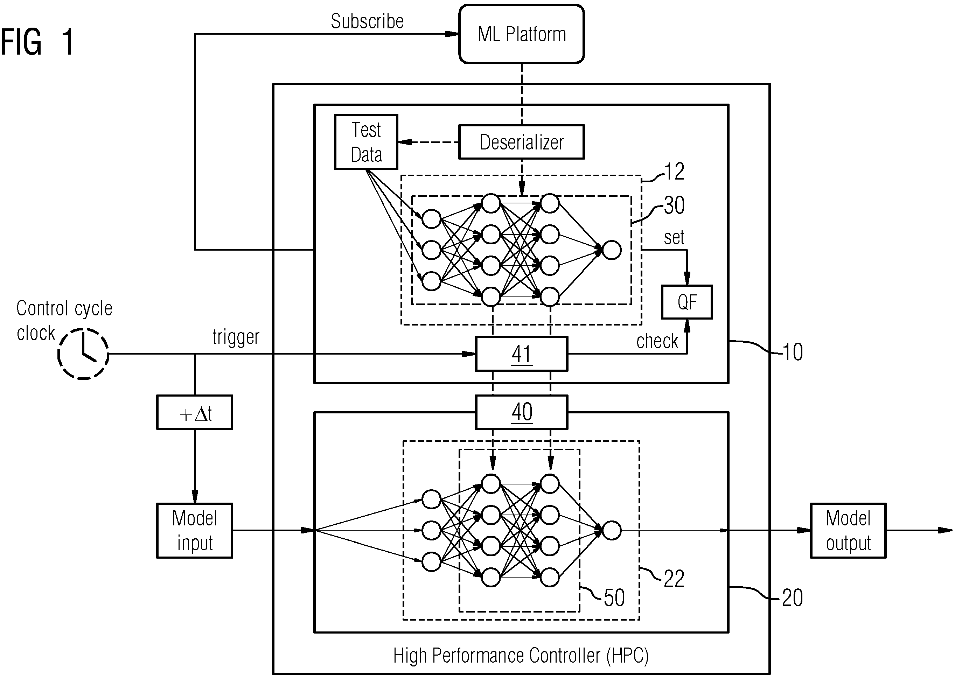

Figure 1 illustrates the technical injection system 1 for injecting the retrained machine learning model 30. The technical injection system 1 comprises two computing units 10, 20, wherein each computing unit 10, 20 comprises a storage medium 12, 22 for storing the retrained and current machine learning models. The current machine learning model is the one that is actually or currently being used by the underlying system, such as the high-performance controller (HPC) of a Simplex controller, which can be used, e.g., for motion planning by a robot unit or autonomous vehicle. Additionally, other data can be stored.

According to an embodiment, the first computing unit 10 is hosted on an embedded device, such as an embedded control computer or an edge device. The first computing unit 10 can be securely connected to a machine learning platform, which can provide a publish-subscribe mechanism. The first computing unit 10 can be notified via the publish-subscribe mechanism when the retrained machine learning model 30 is available.

After reception of the notification, the first computing unit 10 downloads the retrained machine learning model 30. The first computing unit 10 processes the retrained machine learning model 30. For example, the first computing unit 10 deserializes the retrained machine learning model 30 in the first storage medium 12.

The current machine learning model is stored in a second storage medium 22 of the second computing unit 20. The second computing unit 20 can be based on a different architecture than the first computing unit 10. For example, the logic of the second computing unit 20 can be implemented in hardware using an accelerator device (e.g., FPGA or ASIC), whereas the first computing unit 10 is hosted on an edge device.

The second computing unit 20 comprises the injection interface 40, coupled to the second storage unit 22, which stores the current machine learning model.

As part of preprocessing, the retrained machine learning model can be scored at least once on the first computing unit using a first scorer and a test data set to test the model's quality properties (e.g., correctness of results, correct memory usage, etc.).

According to an embodiment, one or more further tests can be performed based on the retrained machine learning model 30 as part of the preprocessing. For example, test and/or validation data e.g. provided with the retrained machine learning model 30 can be used. Additionally or alternatively, memory integrity and/or stress tests can be performed based on the retrained machine learning model 30. The tests aim at preventing any failures and malfunctions when the retrained model is used by the second computing unit.

According to an embodiment, if these tests are successful, a flag e.g. quality flag (QF) will be set to 1, otherwise to 0.

The model injector 41 of the first computing unit 10 checks the flag and if it is set to 1, the model injector 41 extracts the relevant part of the retrained machine learning model 30. The model injector 41 can be implemented as a software function, which is triggered by the system's control cycle clock. For example, the arrays holding the weights and biases of a neural network can be the relevant part. The model injector 41 then sends the relevant part of the retrained machine model to the second computing unit 20 via the injection interface 40. Then, the injection interface 40 injects the relevant part of the retrained machine learning model 30 from the first storage medium 12 into the second storage medium 22. Hence, the relevant part of the current machine learning model 50 is overwritten by the relevant part of the retrained machine learning model 30 without requiring any reinitialization of the current machine learning model on the second computing unit 20.

According to an embodiment, the injection is realized by overwriting the content of a specified, fix-sized segment of the random access memory ("RAM") 22, storing the relevant part of the current machine learning model on an FPGA 20.

As a result, the current machine learning model is adapted by virtue of the replacement of its core (i.e., relevant part) at system runtime in an efficient way. This is because the retrained machine learning model 30 is preprocessed on a separate computing unit 10 and the model core is directly injected in the format expected by the second computing unit 20, such as binary format.

The injection can, for example, transfer the memory in bulk as a bitstream or by value. In the latter case, the second computing unit 20 can provide a communication interface, such as an Ethernet, a serial or a parallel port, whose controller can write the received payload data directly into the RAM segment holding the core of the current machine learning model e.g. the different arrays holding the biases and weights of a neural network.

It is the task of the external first computing device 20 to compress the retrained machine learning model 30 using an efficient model compression technique so that the size of the relevant parts of a retrained model will match the size of the relevant parts of the current model.

For example, such a model compression technique can quantize the values of the weights and biases of a neural network model in order to facilitate an efficient representation of the individual weights and biases as a byte or integer instead of a double word. The weights and/or biases arrays can then be packed into a compact bitstream, which can be directly written into the RAM of an accelerator device.

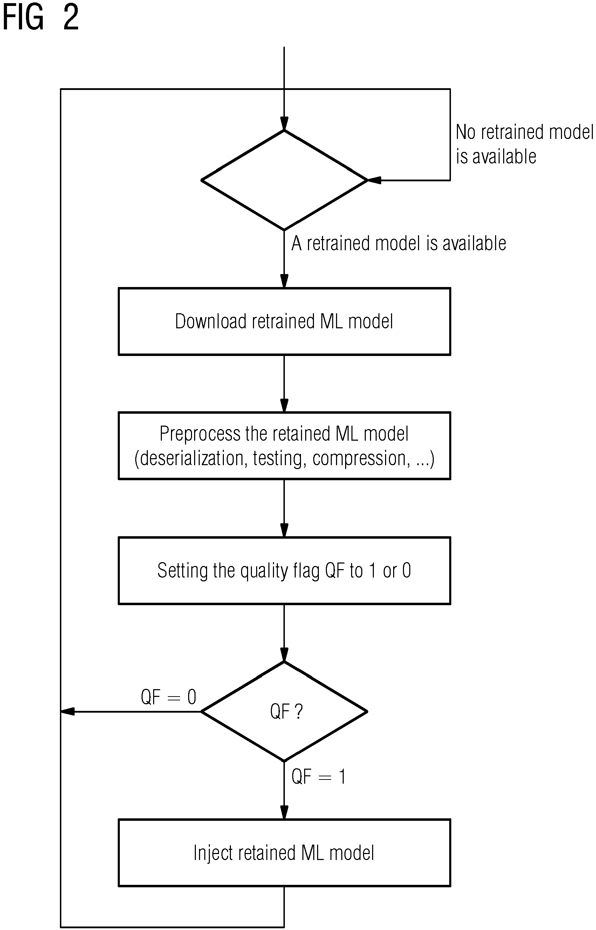

Figure 2 illustrates a computer-implemented method for injection according to an embodiment of the invention.

## Claims

1. Technical injection system (1) for injecting a retrained machine learning model (30), comprising:
a. a first computing unit (10) comprising a first storage medium (12), wherein the first computing unit (10) is configured for
providing the retrained machine learning model (30); and
preprocessing the retrained machine learning model (30); wherein
the retrained machine learning model (30) is stored in the first storage medium (12);
b. a second computing unit (20) comprising a second storage medium (22) and an injection interface (40), wherein the injection interface (40) is configured for
injecting at least one relevant part of the retrained machine learning model (30) after processing from the first storage medium (12) of the first computing unit (10) into the second storage medium (22) of the second computing unit (20) by means of the injection interface at runtime; wherein
a current machine learning model is stored in the second storage medium (22); and
the injection comprises the identification of the at least one relevant part of the current machine learning model and
the replacement of the identified at least one relevant part of the current machine learning model by the corresponding at least one relevant part of the retrained machine learning model.

2. Technical injection system (1) according to claim 1, wherein the first computing unit (10) is hosted on or designed as an embedded device, preferably an embedded control computer or an edge device.

3. Technical injection system (1) according to claim 1 or claim 2, wherein the first storage medium (12) is a volatile or non-volatile storage medium.

4. Technical injection system (1) according to any of the preceding claims, wherein the preprocessing comprises compressing, decompressing, quantizing, optimizing, deserializing, initializing and/or testing.

5. Technical injection system (1) according to any of the preceding claims, wherein the first computing unit (10) further comprises an input interface, configured for receiving a notification when the retrained machine learning model (30) is available from a machine learning platform, other computing unit or other technical system.

6. Technical injection system (1) according to any of the preceding claims, wherein the input interface is further configured for receiving or downloading the retrained machine learning model (30) from a machine learning platform, other computing unit or other technical system, preferably after notification.

7. Technical injection system (1) according to any of the preceding claims, wherein the first computing unit (10) is further configured for performing at least one test based on the retrained machine learning model (30) before the injection is performed by the first computing unit through the injection interface of the second computing unit.

8. Technical injection system (1) according claim 7, wherein the injection is performed in the case that the test is successful.

9. Technical injection system (1) according to any of the preceding claims, wherein the second computing unit (20) is designed as an accelerator component, preferably FPGA, Field Programmable Gate Array, or ASIC, Application-Specific Integrated Circuit.

10. Technical injection (1) system according to any of the preceding claims, wherein the second storage medium (22) is a volatile or non-volatile storage medium.

11. Technical injection system (1) according to any of the preceding claims, wherein the relevant part of the retrained machine learning model (30) is at least one internal data structure, at least one layer, at least one bias, at least one weight and/or at least one parameter.

12. Technical injection system (1) according to any of the preceding claims, wherein the injection is synchronized with a control cycle clock.

13. Technical injection system (1) according to any of the preceding claims, wherein the injection interface (40) is designed as an Ethernet, a parallel or a serial communication interface, preferably connected to a communication controlled of the second computing unit.

14. Technical injection system (1) according to any of the preceding claims, wherein the current machine learning model and the retrained machine learning model (30) are semantically equivalent, preferably designed as neural networks, even more preferably designed as feedforward neural networks, convolutional neural networks or recurrent neural networks.
